# EUROPÄISCHE PATENTSCHRIFT

(11) **EP 3 436 337 B1**
(45) Veröffentlichungstag und Bekanntmachung des Hinweises auf die Patenterteilung: **19.02.2020**
(21) Anmeldenummer: 17714738.6
(22) Anmeldetag: 30.03.2017
(51) Int. Cl.: G05D 1/06, G05D 1/00, B63G 8/14, B63G 8/00, G01S 15/58, G06T 7/246

(54) **SYSTEM UND VERFAHREN ZUR NAVIGATION EINES AUTONOM NAVIGIERENDEN TAUCHKÖRPERS BEIM EINFAHREN IN EINE FANGSTATION**
SYSTEM AND METHOD OF NAVIGATION OF AN AUTONOMOUSLY NAVIGATED SUBMERSIBLE VEHICLE AT ENTERING A CATCH STATION
SYSTÈME ET PROCÉDÉ DE NAVIGATION D'UN VÉHICULE DE PLONGÉE A NAVIGATION AUTONOME LORS DE L'ENTRÉE DANS UNE STATION D'ARRÊT

(30) Priorität: 31.03.2016 EP 16163313
(43) Veröffentlichungstag der Anmeldung: 06.02.2019
(73) Patentinhaber: Fraunhofer-Gesellschaft zur Förderung der angewandten Forschung e.V., 80686 München (DE)
(72) Erfinder: BEYERER, Jürgen, 69234 Diehlheim (DE); BRINK, Gunnar, 76227 Karlsruhe (DE)
(74) Vertreter: Pfitzner, Hannes
(86) Internationale Anmeldenummer: PCT/EP2017/057599
(87) Internationale Veröffentlichungsnummer: WO 2017/167913

(56) Entgegenhaltungen:
- WO-A1-2010/071842
- CN-A- 103 963 947
- CN-A- 104 002 942
- DE-A1-102013 207 731
- JP-A- 2011 163 933
- US-B1- 8 145 369
- COWEN S ET AL: "Underwater docking of autonomous undersea vehicles using optical terminal guidance", OCEANS '97. MTS/IEEE CONFERENCE PROCEEDINGS HALIFAX, NS, CANADA 6-9 OCT. 1997, NEW YORK, NY, USA,IEEE, US, Bd. 2, 6. Oktober 1997 (1997-10-06), Seiten 1143-1147, XP010246137, DOI: 10.1109/OCEANS.1997.624153 ISBN: 978-0-7803-4108-1

## Beschreibung

Ausführungsbeispiele der vorliegenden Erfindung beziehen sich auf ein System zur Navigation eines autonom navigierenden Tauchkörpers beim Einfahren in eine Fangstation unter der Wasseroberfläche sowie auf ein zugehöriges Verfahren. Weitere Ausführungsbeispiele beziehen sich auf eine Vorrichtung zur Bergung eines fahrenden autonom navigierenden Tauchkörpers unterhalb der Wasseroberfläche.

Viele Aussetz- und Bergevorrichtungen für bemannte und unbemannte Tauchfahrzeuge verwenden Bordkrane, die über die seitliche Bordewand oder Heck des Mutterschiffs operieren. Diese Vorgehensweise funktioniert beim Umgang mit schweren und empfindlichen Unterwassergerät im rauen Wasser nicht zufriedenstellend. In erster Linie ist es sehr wahrscheinlich, dass das Unterwassergerät beim Hebe- oder beim Absetzvorgang pendelt, dabei in Kontakt mit dem Schiff gerät und Schäden an Unterwassergerät oder Mutterschiff entstehen, auch aufgrund der unterschiedlichen Amplituden und Frequenzgänge der beiden Objekte. Die Gefahr ist stets, dass das Unterwasserfahrzeug beim Herausziehen pendelt und gegen die Bordwand stößt.

Wenn das Fahrzeug an Bord gehievt wird, nähert es sich zudem der Luft-Meer-Grenzfläche bis es teilweise oder vollständig nicht mehr schwimmt, sondern sich ganz oder teilweise in der Luft befindet aber von aufeinander folgenden hohen Wellen darunter erreicht werden kann. Eine solche Situation führt dazu, dass die Hubseile durch die Auftriebskräfte des Wassers ganz oder teilweise kurz vom Gewicht des Unterwassergeräts entlastet werden und dann wieder belastet werden, je nachdem wie der Wellenberg verläuft. Auch das kann erhebliche Schäden an den schweren, aber empfindlich Struktur des Unterwasserfahrzeugs als auch am Mutterschiff bewirken.

Im Idealfall gelingt das Bergen selbst dann, wenn das Mutterschiff Rollbewegungen von bis zu 15° macht und die Wellenhöhe bis zu 5 Meter beträgt. Wenn das Unterwasserfahrzeug (AUV = autonomes Unterwasserfahrzeug oder hier einfach "Fisch" genannt) von der Mission zurück kommt und unterdessen die Witterung sehr schlecht geworden ist, wartet der Kapitän mit dem Bergen, bis Dünung und Wind sich beruht haben. Die Schiffskosten liegen bei etwa 50k€ am Tag, so dass das Warten große wirtschaftliche Nachteile hat.

Die uns bekannten Ansätze lösen das Problem durch leichtere Zwischenkonstruktionen, die den Fisch an der Wasseroberfläche fangen, fixieren und dann wird der Fisch mit der Hilfskonstruktion mit einem Kran oder einer Rampe verbunden und dann damit an Bord gehievt.

Ein weiteres Beispiel ist das Bergesystem des AUVs Marlin von Lockheed Martin. Vom Mutterschiff aus wird eine Leine in das Wasser abgelassen, an dessen Ende sich ein akustischer Transponder befindet. Das AUV mit ausgeklappter Fangvorrichtung an der Nase steuert diesen Transponder an und überfliegt ihn. Hierbei wird die oberhalb des Transponders verlaufende Leine eingefangen und über einen Greifmechanismus mit einem weiteren Seil, das an Öse des AUVs befestig ist, verbunden. Sobald das Kranseil eingeholt wird, verfängt sich ein an der Leine angebrachter Stopper in der Öse. Hierdurch wird die Kraftübertragung auf das AUV realisiert. Das AUV wird anschließend aus dem Wasser herausgehoben. Am Kran ist eine Andockvorrichtung angebracht, gegen die das AUV gezogen wird.

Das französische Meeresforschungsinstitut IFREMER hat ein System patentiert, mit einem Käfig, der zu Wasser gelassen wird. Um ein Fahrzeug zu bergen, wirft dieses ein Seil mit einer Boje aus, welches vom Schiff auf mittels eines weiten Seils, das mit einem Haken versehen ist, aufgenommen wird. Das geborgene Seil des AUVs wird am Käfig befestigt und die Station zu Wasser gelassen. Durch die seitlich angebrachten Auftriebskörper schwimmt die Station auf der Wasseroberfläche, die Fangstation selber befindet sich dabei unter Wasser. Über die Winde an der Station wird das AUV in den Käfig hineingezogen und mithilfe von hydraulisch betriebenen Verriegelungsmechanismen fixiert. Anschließend wird der Käfig mitsamt dem AUV durch die Station hindurchgezogen. Dabei richtet sich der Käfig durch eine Führungsschiene entlang der Längsachse aus. Nach diesem Vorgang befindet sich das AUV innerhalb der Dockingstation und wird mit einem weiteren Verriegelungsmechanismus fixiert.

Aufgabe der vorliegenden Erfindung ist es, das Aussetzen und vor allem das Bergen von autonomen Unterwasserrobotern weiter zu verbessern und dabei die im Stand der Technik benannten Nachteile zu vermeiden.

Die Aufgabe wird durch die unabhängigen Patentansprüche gelöst.

Ausführungsbeispiele der vorliegenden Erfindung schaffen ein System zur Navigation eines autonom navigierenden Tauchkörpers (bzw. AUV oder Fisch) beim Einfahren in eine Fangstation unter der Wasseroberfläche. Das System umfasst in der Basisausstattung Mittel zur Ermittlung eines Ist-Bewegungsvektors des autonom navigierenden Tauchkörpers in Bezug auf den Soll-Bewegungsvektor, welcher die optimale Einfahrrichtung in die Fangstation beschreibt. Ein Beispiel für ein derartiges Mittel ist eine Unterwasserkamera, die z.B. an der Fangstation angebracht ist und den autonom navigierenden Tauchkörper über die Zeit oder anhand von charakteristischen Merkmalen, wie z.B. Lichtsignalen, so beobachtet, dass sein Ist-Bewegungsvektor ermittelt werden kann. Dadurch, dass die Unterwasserkamera auf der Fangstation angeordnet ist, wird der Ist-Bewegungsvektor gleich in Bezug auf den Soll-Bewegungsvektor ermittelt (wenn der Kamerawinkel im Verhältnis zu der optimalen Einfahrrichtung bekannt ist). Das System umfasst ferner eine Berechnungseinheit, die entweder auch an der Fangstation oder auf dem Mutterschiff oder auch in dem autonom navigierenden Tauchkörper angeordnet ist. Die Berechnungseinheit dient zur Ermittlung der Abweichung zwischen dem Ist-Bewegungsvektor und dem Soll-Bewegungsvektor, um ausgehend von der Abweichung Steuersignale zu bestimmen.

Entsprechend bevorzugten Ausführungsbeispielen kann das System auch noch zusätzlich eine Steuerung umfassen, die eben ausgehend von der ermittelten Abweichung die Steuersignale bestimmt und dann beim Einfahren direkt den autonom navigierenden Tauchkörper steuert, so dass der Ist-Bewegungsvektor dem Soll-Bewegungsvektor angenähert wird bzw. diese in Deckung gebracht werden. Die Steuerung kann bevorzugterweise aber nicht notwendigerweise in der Fangstation angeordnet sein und mittels einer Fernsteuerungsverbindung, wie z.B. einem Akustikmodem oder einem Lichtmodem, die Steuersignale an den autonom navigierenden Tauchkörper übermitteln. Der autonom navigierenden Tauchkörper betätigt dann in Abhängigkeit dieser Steuersignale seine Steuereinrichtung (z.B. Ruder). Alternativ zu der automatisierten Steuerung des AUVs in der Umgebung der Fangstation wäre es auch dankbar, dass die Steuerung durch den Bediener übernommen wird, der ausgehend von der ermittelten Abweichung zwischen Ist-Bewegungsvektor und Soll-Bewegungsvektor seine Steueraufgabe vornimmt.

Ausführungsbeispielen der vorliegenden Erfindung liegt die Erkenntnis zugrunde, dass erkannt wurde, dass das Bergen von autonom navigierenden Tauchkörpern, AUVs, unterhalb der Wasseroberfläche wesentlich einfacher bewerkstelligt werden kann, wenn das Problem gelöst wird, die Bewegungsrichtung des autonom navigierenden Tauchkörpers in Bezug auf die Fangstation bzw. Fangstation genau zu bestimmen und dadurch besser zu kontrollieren. Die Beobachtung und Lokalisierung des autonom navigierenden Tauchkörpers erfolgt unter Zuhilfenahme von bevorzugterweise an der Fangstation angebrachten Sensoren, wie z.B. ein oder mehreren Kameras oder einem Sonargerät. Da die Kamera an der Fangstation angeordnet ist, ist der Bezug zwischen der Perspektive derselben und einem sogenannten Soll-Bewegungsvektor, der die optimale Einfahrrichtung für einen autonom navigierenden Tauchkörper in die Fangstation beschreibt, bekannt. Bei der Beobachtung des autonom navigierenden Tauchkörpers kann nun die Ist-Bewegungsrichtung bzw. der Ist-Bewegungsvektor des autonom navigierenden Tauchkörpers ermittelt werden, so dass durch die Relation des Ist-Bewegungsvektors zu dem Soll-Bewegungsvektor eine Abweichung zwischen denselben ermittelt werden kann, um ausgehend von dieser ermittelten Abweichung die Steuerung des AUVs vorzunehmen. Hierbei wird im Nahbereich der Fangstation von dem autonomen Betrieb des AUVs auf den Fernbedienungsmodus umgeschaltet, d.h. also, dass das AUV, z.B. per (Akustik-) Modem, von der Fangstation aus gesteuert wird. Durch diesen Ansatz wird ermöglicht, dass das AUV sicher und zuverlässig unter Wasser geborgen werden kann. Das Bergen unter Wasser ist deshalb vorteilhaft, weil die Antriebe des AUVs häufig zu schwach sind, um z.B. bei rauem Wetter gegen die Kräfte an der Wasseroberfläche anzukommen. Das Vorsehen der Sensorik, wie z.B. der Kamera an der Fangstation ist deshalb bevorzugt, weil das AUV häufig aus Platzgründen oder wegen der geringen Batteriekapazität nur sehr begrenzte Möglichkeiten hat, die Sensorik anzubringen.

Entsprechend Ausführungsbeispielen kann, wie bereits angedeutet, die Ermittlung des Ist-Bewegungsvektors vereinfacht werden, indem das AUV Positionsleuchten hat, anhand derer die Orientierung desselben bzw. die Längsrichtung detektierbar ist. Eine weiter bevorzugte Variante ist das Emittieren eines gerichteten Lichtstrahls, der im Wasser gut detektiert werden kann, ausgehend von dem AUV. Der Lichtstrahl kann entlang der Längsachse ausgesendet werden und zeigt so direkt die Ist-Bewegungsrichtung an.

Entsprechend weiteren Ausführungsbeispielen kann die Fangstation auch eine Schnittstelle zum autonom navigierenden Tauchkörper umfassen, über welche der autonom navigierenden Tauchkörper geladen werden kann oder ein Datenaustausch erfolgt. Dies ist deshalb möglich, weil die Fangstation, z.B. in Form eines Käfigs zusammen mit dem autonom navigierenden Tauchkörper einfach neben dem Boot mitgeschleppt werden kann, ohne dass es hier zu Beschädigungen von Mutterschiff, Fangstation oder autonom navigierenden Tauchkörper kommt, da sowohl die Fangstation als auch der autonom navigierenden Tauchkörper sicher unter der Wasseroberfläche mitgeschleppt werden.

Alternativ zu dem an dem Mutterschiff befestigten Käfig als Fangstation kann die Fangstation auch in das Mutterschiff, welches ein herkömmliches Oberwasserboot aber auch ein Unterwasserboot sein kann, integriert sein. Das Mutterschiff bzw. das U-Boot hat in diesem Ausführungsbeispiel dann eine unter der Wasseroberfläche angeordnete Unterwasseröffnung, in welche der autonom navigierenden Tauchkörper einfährt. Der Steuerungsmechanismus bzw. insbesondere die Detektion der Ist-Bewegungsrichtung im Vergleich zu der Soll-Bewegungsrichtung entspricht obigen Ausführungsbeispielen.

Ein weiteres Ausführungsbeispiel bezieht sich auf ein entsprechendes Verfahren mit den Schritten Ermitteln der Ist-Bewegungsrichtung in Bezug auf die Soll-Bewegungsrichtung und Ermitteln der Abweichung zwischen den zwei Bewegungsvektoren. Das Verfahren kann entsprechend weiteren Ausführungsbeispielen auch noch den Schritt des Steuerns des autonom navigierenden Tauchkörpers selbst umfassen, wobei bevorzugterweise aber nicht notwendigerweise das Steuern automatisiert durchgeführt wird.

Entsprechend weiteren Ausführungsbeispielen kann das System ausgebildet sein, den autonom navigierenden Tauchkörper beim Einfahren in die Fangstation sehr effektiv abzubremsen. Hierzu hat es sich als bevorzugt herausgestellt, ein Fangseil, welches beispielsweise mit Stoßdämpfern gegenüber dem Käfig gelagert ist, innerhalb des Käfigs aufzuspannen, so dass der autonom navigierenden Tauchkörper durch dieses Fangseil abgebremst werden kann. Der autonom navigierenden Tauchkörper kann hierzu beispielsweise einen Haken aufweisen oder einen Haken ausklappen, so dass eine gute Ineingriffnahme zwischen dem Fangseil und dem autonom navigierenden Tauchkörper erfolgt. Deshalb ist die Steuerung dazu ausgebildet, sobald der autonom navigierenden Tauchkörper in den Käfig einfährt, den Haken auszufahren, um das Bremsmanöver durchzuführen. Hintergrund für den Bedarf nach der Abbremsung ist, dass der autonom navigierenden Tauchkörper nur gesteuert werden kann, wenn eine gewisse Anströmung der Ruder vorliegt. Dazu braucht der autonom navigierenden Tauchkörper eine Minimalgeschwindigkeit von beispielsweise 1 kn, selbst beim Einfahren in die Fangstation.

Weitere Ausführungsbeispiele beziehen sich darauf, dass der autonom navigierenden Tauchkörper, wenn er das Fangseil verpasst hat, ein sogenanntes Durchstartmanöver durchführt, das heißt also auf der Hinterseite des Käfigs wieder hinausfährt und den Käfig neu anfährt.

Ein weiteres Ausführungsbeispiel bezieht sich auf ein entsprechendes Verfahren zur Steuerung dieses Durchstartvorgangs. Weitere Ausführungsbeispiele beziehen sich auf ein Computerprogramm zur Durchführung der oben erläuterten Verfahren.

Weiterbildungen sind in den Unteransprüchen definiert. Ausführungsbeispiele der vorliegenden Erfindungen werden nachfolgend anhand der beiliegenden Zeichnungen erläutert. Es zeigen:
- Fig. 1a: eine schematische Darstellung eines Systems umfassend eine Fangstation und einen autonom navigierenden Tauchkörper beim Einfahren gemäß Ausführungsbeispielen;
- Fig. 1b: ein schematisches Flussdiagramm eines Navigationsvorgangs beim Einfahren des autonom navigierenden Tauchkörpers in die Fangstation gemäß Ausführungsbeispielen;
- Fig. 2: eine schematische Darstellung eines erweiterten Systems aus autonom navigierenden Tauchkörper und Fangstation;
- Fig. 3: eine schematische Darstellung von autonom navigierenden Tauchkörper und Fangstation zur Illustration des Abbremsmanövers; und
- Fig. 4: eine schematische Darstellung einer mögliche Anordnung der Fangstation in Bezug auf das Mutterschiff.

Bevor nachfolgend Ausführungsbeispiele der vorliegenden Erfindung anhand der Figuren erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

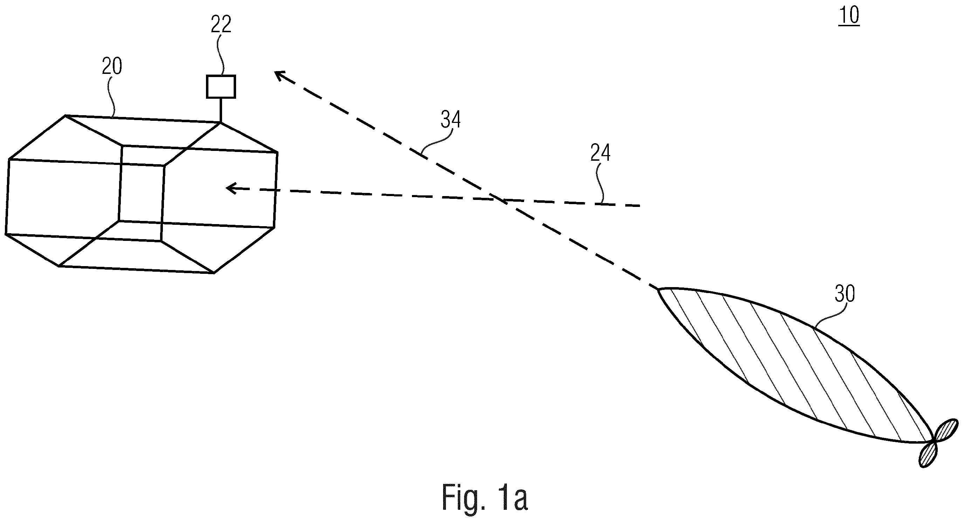

Fig. 1a zeigt ein System 10 mit einer Fangstation 20 und einem autonom navigierenden Tauchkörper 30.

In diesem Ausführungsbeispiel ist die Fangstation 20 beispielsweise als rohr- oder wabenförmige Käfigstruktur ausgeführt und dient zur Aufnahme und Bergung des autonom fahrenden autonom navigierenden Tauchkörpers 30 sowie als Schutz dessen vor Wellen und Treibgut und auch vor der Kollision des autonom navigierenden Tauchkörpers 30 mit der Bordwand des Mutterschiffs (nicht gezeigt). Typischerweise ist die Fangstation 20 mindestens so lang wie der autonom navigierenden Tauchkörper 30. Der autonom navigierenden Tauchkörper 30 befindet sich bei Beginn des Bergevorgangs unterhalb der Gischt- und Wellenzone in einem Bereich, wo das Wasser vergleichsweise ruhig ist.

Der autonom navigierenden Tauchkörper 30, im bevorzugten Fall ein autonom fahrendes Fahrzeug (AUV), verfügt über einen Antrieb und Steuermittel, wie z.B. einer Ruderanlage, sowie im Normalfall über eigene Navigationsmittel und eigene Steuerlogik (-Algorithmen). Der autonom navigierenden Tauchkörper 30 kann dynamisch navigieren, das heißt über Ruder, die erst dann wirken, wenn der autonom navigierenden Tauchkörper 30 in Fahrt ist. Die Ruderanlage wird entweder durch den Antrieb selbst oder durch die Fahrt durch das Wasser angeströmt, so dass diese wirken können. Alternativ wäre es auch denkbar, dass Podantriebe, das heißt schwenkbare Antriebsschrauben vorgesehen sind. Die Steuerung des autonom navigierenden Tauchkörpers kann autonom, teilautonom oder mittels einer Fernsteuerungsverbindung erfolgen, wobei Fernsteuerungsverbindung im Fall des Unterwassereinsatzes typischerweise durch eine Fernsteuerungsverbindung basierend auf einem Akustikmodem oder einem Lichtmodem (zur Aussendung eines modulierten Lichtstrahls) realisiert ist.

Da die Fangstation 20 im Regelfall vom Mutterschiff abgesetzt wird, sind die Position und vor allem auch die Ausrichtung im dreidimensionalen Raum variabel. Dies stellt für den autonom navigierenden Tauchkörper eine schwierig zu bewerkstelligende Aufgabe dar, da der autonom navigierenden Tauchkörper aus eigenen Mitteln nicht ermitteln kann, wie er in die Fangstation 20 einfahren kann. Deshalb besteht der Bedarf einer Navigationshilfe, die das Einfahren des autonom navigierenden Tauchkörpers 30 in die Fangstation verbessert.

Hierzu weist in diesem Ausführungsbeispiel die Fangstation 20 Sensoren, wie z.B. Kameras, Sonare oder andere Sensoren 22 auf, die den autonom navigierenden Tauchkörper beobachten. Diese Sensoren 22 sind fix auf der Fangstation 20 angebracht, so dass die Perspektive beispielsweise der Kamera 22, in einem ganz klaren Bezug zu der optimalen Einfahrrichtung 24 in die Fangstation 20 besteht. Die optimale Einfahrrichtung, welche auch als Soll-Bewegungsvektor bezeichnet wird, ist mittels des Pfeils illustriert. In diesem Ausführungsbeispiel, in welchem die Fangstation 22 eine wabenförmige Käfigstruktur darstellt, verläuft die optimale Einfahrrichtung 24 mittig und senkrecht durch / zu der Öffnung der Wabe orientiert.

Die Kamera 22 beobachtet den autonom navigierenden Tauchkörper 30 und hierbei insbesondere die Fahrt des autonom navigierenden Tauchkörpers 30 durch das Wasser. Ausgehend von der Fahrt kann eine Ist-Bewegungsrichtung bzw. ein Ist-Bewegungsvektor 34 des autonom navigierenden Tauchkörpers 30 ermittelt werden. Diese Ermittlung erfolgt bevorzugterweise dynamisch, das heißt anhand der Bewegungsrichtung des autonom navigierenden Tauchkörpers bzw. der Bewegung über die Zeit. Alternativ wäre es auch denkbar, dass Charakteristika, wie z.B. die Längsachse des autonom navigierenden Tauchkörpers 30 erkannt wird, abhängig von welcher der Bewegungsvektor ermittelt werden kann.

Nachdem nun sowohl der Ist-Bewegungsvektor 34 als auch der Soll-Bewegungsvektor 24 bekannt sind, kann durch Ermittlung der Abweichung zwischen den zwei Vektoren 24 und 34 auf den Korrekturbedarf bezüglich der Bewegung 34 des autonom navigierenden Tauchkörpers 30 geschlossen werden. Ausgehend hiervon können in optionaler Weise dann auch Steuersignale bestimmt werden, mittels welcher der autonom navigierenden Tauchkörper 30 gesteuert ist.

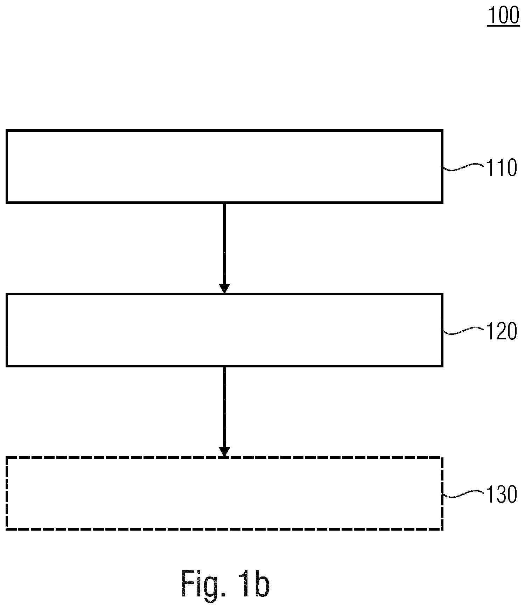

Dieses Verfahren ist in Fig. 1b gezeigt. Fig. 1b zeigt das Verfahren 100 mit den Schritten 110 des Ermittelns und des Ist-Bewegungsvektors 34 und des Ermitteins 130 der Abweichung zwischen dem Ist-Bewegungsvektor 34 und dem Soll-Bewegungsvektor 24. Das Verfahren umfasst ferner den optionalen Schritt 130 des Bestimmens der Steuersignale zur Steuerung des autonom navigierenden Tauchkörpers 30. Diese Steuersignale werden beispielsweise vom Käfig 20 aus an den autonom navigierenden Tauchkörper 30 unter Zuhilfenahme eines Akustikmodems oder eines modellierten Lichtstrahls gesendet, so dass der autonom navigierenden Tauchkörper 30 aktiv in die Wabenstruktur einfährt bzw. in erster Linie erst einmal, dass sich seine Bewegungsbahn 34 an die Soll-Bewegungsbahn 24 annähert bzw. diese erreicht.

An dieser Stelle sei darauf hingewiesen, dass die Steuerelektronik zur Steuerung des autonom navigierenden Tauchkörpers 30 auch bevorzugterweise an der Fangstation 20 angeordnet ist, die die Berechnung und Navigation des autonom navigierenden Tauchkörpers 30 zumindest in der Umgebung um die Fangstation 20 übernimmt. Das heißt also, dass der autonom navigierenden Tauchkörper 30 einen Autonomfahrmodus (in welchem er selber steuert) und einen Fernbedienungsfahrmodus (in welchem er von extern, z.B. von der Steuerung an der Fangstation 20 aus gesteuert wird) hat. Der Fernbedienungsfahrmodus wird im Nachbereich der Fangstation 20 (d.h. beim Einfahren oder kurz vor der Einfahrt in die Fangstation 20, z.B. im Umkreis von 0-10m oder im Umkreis bis 25m oder bis 50m) aktiviert. Hierzu kann die Steuerung ein entsprechendes Steuersignal senden. In anderen Worten heißt das, dass kurz vor Einfahrt in die Fangstation eine Übergabe von autonomer Navigation auf ferngesteuerte Navigation erfolgt und dass dabei die Beobachtung über Kameras oder Sensoren z.B. an der Fangstation durchgeführt werden.

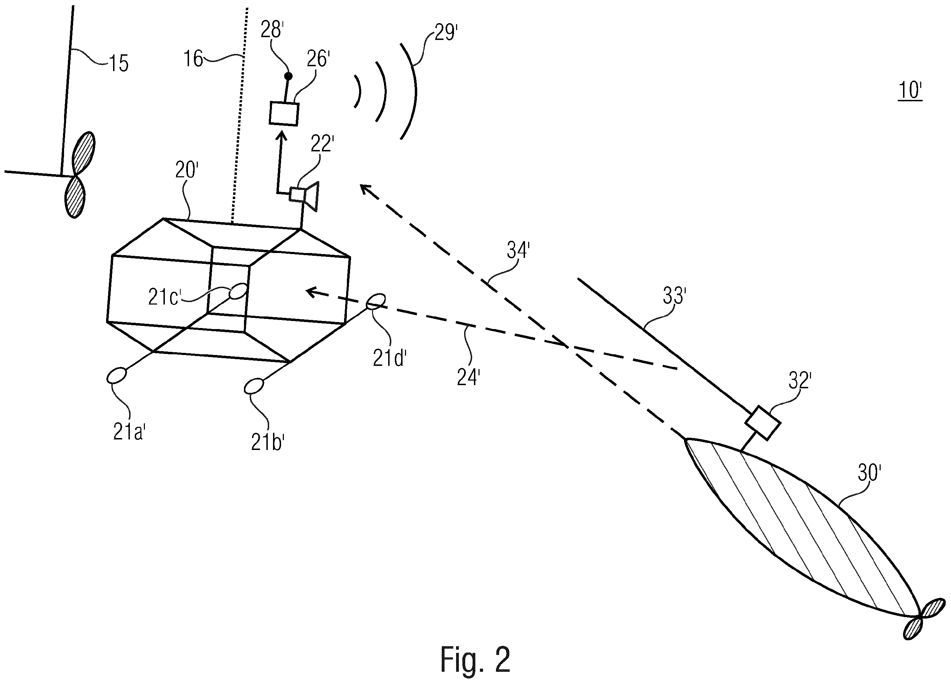

Bezug nehmend auf Fig. 2 wird ein weiteres Ausführungsbeispiel erläutert, das im Vergleich zu dem System 10 etwas komplexer ausgestaltet ist. Fig. 2 zeigt ein System 10' mit einer Fangstation 20' und der notwendigen Elektronik zur Ermittlung der Ist-Bewegung des autonom navigierenden Tauchkörpers 30' und der Steuerung desselben. Diese Elektronik umfasst in erster Linie die Kamera 22', die Berechnungseinheit 26' und das Kommunikationsmodem 28' bzw. Akustikmodem 28'.

Die Fangstation 20' kann beispielsweise mittels eines Seiles 16 an das Mutterschiff 15 angekoppelt sein. Das Seil 16 ist flexibel, so dass ggf. der Bedarf besteht, die Fangstation 20 im Raum zu stabilisieren. Sie ist idealerweise in drei Dimensionen bzw. Winkeln des Raumes orientiert und etwa über Trägheitssensoren (nicht dargestellt) vergleichbar mit einem Segway stabilisiert. Die Aktorik der Fangstation 20' kann beispielsweise durch Propeller und Turbinen 21a'-21d' realisiert sein. Additiv oder alternativ zu den Propellern 21a'-21d' kann die Stabilisierung auch mittels mit Winden betätigten Seilen erfolgen. Dadurch, dass die Seile in Abhängigkeit vom Seegang gestrafft oder gelöst werden, kann eine Seegangskompensierung realisiert werden. Über das Seil kann die Fangstation 20' allein oder zusammen mit dem autonom navigierenden Tauchkörper 30' z.B. mittels eines Krans eingeholt (geborgen) werden. Es sei an dieser Stelle auch darauf hingewiesen, dass eine feste Befestigung der Fangstation 20' an dem Mutterschiff 15, z.B. mittels eines Gestänges möglich wäre.

Der autonom navigierenden Tauchkörper 30' ist vergleichbar mit dem autonom navigierenden Tauchkörper 30, umfasst jedoch zusätzlich eine fokussierte Lichtquelle 32', die entlang der Längsrichtung des autonom navigierenden Tauchkörpers 30 ein Lichtsignal 33' ausgibt. Dieses Lichtsignal kann beispielsweise von der Nase oder von einer anderen Position an dem autonom navigierenden Tauchkörper 30 abgegeben werden. Bevorzugterweise handelt es sich bei der Lichtquelle 32' um eine fokussierte Lichtquelle, wie z.B. ein grüner oder blauer Laser, da diese im Wasser eine relativ hohe Reichweite haben. Es ist bevorzugt, dass die fokussierte Lichtquelle nach vorne zeigt und so sichtbar macht, wo das AUV 30' sich gerade befindet und in welche Richtung 34' es fährt. Alternativ zu einer gerichteten Lichtquelle können auch mehrere Positionsleuchten, z.B. entlang der Längsachse des autonom navigierenden Tauchkörpers 30' vorgesehen sein, anhand derer auch die Orientierung des autonom navigierenden Tauchkörpers bestimmbar ist.

Die Kamera 22' erfasst das Lichtsignal 33', das parallel zu der Ist-Bewegungsrichtung 34' verläuft und ermittelt so den Ist-Bewegungsvektor 34'. Die Kamera 22', die hier eine Perspektive parallel zu dem Soll-Bewegungsvektor 24' hat, kann dieses ermittelte Einzel-Frame oder Frame-Set über die Zeit an die Berechnungseinheit 26' ausgeben, die dann die Abweichung zwischen den Vektoren 24' und 34' ermittelt. Ferner ermittelt die Berechnungseinheit 26' auch die notwendigen Steuersignale zur Korrektur des Kurses des autonom navigierenden Tauchkörpers 30'. Diese Steuersignale werden dann über das Modem 28' z.B. als Akustiksignale 29' an den autonom navigierenden Tauchkörper 30' übermittelt, der dann ausgehend hiervon seinen Kurs entsprechend korrigiert.

An dieser Stelle sei auch darauf hingewiesen, dass es entsprechend weiteren Ausführungsbeispielen auch denkbar wäre, dass die Fangstation 20' über eine derartig fokussierte Lichtquelle 32' verfügt und die Sensorik, wie z.B. die Kamera 22' zusammen mit der Steuerung 26' in dem AUV angeordnet ist. Das Prinzip hierbei ist dasselbe, wobei dann das AUV 30' den Ist-Bewegungsvektor kennt und diesen nur in Bezug auf den ermittelten Soll-Bewegungsvektor setzt.

Entsprechend weiteren Ausführungsbeispielen wäre es auch denkbar, dass die Fangstation 20' über einen zusätzlichen Scheinwerfer verfügt, der die Umgebung ausleuchtet, so dass der Tauschkörper 30' besser identifiziert werden kann.

Bezug nehmend auf die Fangstation 20' sei angemerkt, dass, um den autonom navigierenden Tauchkörper 30' beim Einfahren zu schützen, der Käfig entsprechend Ausführungsbeispielen auch mit Schäumen oder mit einem elastischen Material, wie z.B. luftgefüllte Schläuche, ausgekleidet sein kann, die einen Schutz vor harten Kollisionen bieten und so sowohl den Käfig, aber insbesondere auch den autonom navigierenden Tauchkörper 30' vor Beschädigungen schützen.

Durch das hier vorgeschlagene Konzept kann auch den weiteren Randbedingungen von AUVs Genüge getan werden. Diese sind, dass das AUV aufgrund der beschränkten Batteriekapazität gerade am Ende der Mission wenig Energie für Navigation und Steuerung hat. Das Konzept vermeidet dadurch, dass es Komponenten an die Fangstation verlagert, einerseits Energieverbrauch bzw. Energieverbraucher an Bord und andererseits auch die "Beschlagnahmung" von Bauraum des AUVs.

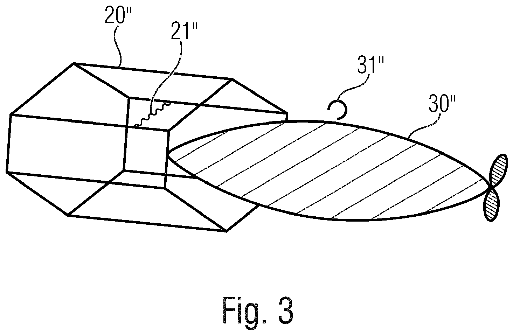

Bezug nehmend auf Fig. 3 wird nun ein weiterer Aspekt beim Einfahren eines autonom navigierenden Tauchkörpers 30", das mit dem autonom navigierenden Tauchkörper 30 bzw. 30' vergleichbar ist, in die Fangstation 20" erläutert. Die Fangstation 20" ist, wie die vorherigen Fangstationen 20 bzw. 20', als wabenförmiger Käfig gestaltet, wobei der wabenförmige Käfig 20" sowohl vorne als auch hinten offen ist. Der wabenförmige Käfig 20" weist ein im Inneren lose gespanntes Fangseil 21" auf. Das Fangseil 21" ist ausgebildet beim Einfahren des autonom navigierenden Tauchkörpers 30" in den Käfig 20" mit dem autonom navigierenden Tauchkörper 30' in Eingriff zu gelangen und hierdurch den autonom navigierenden Tauchkörper 30" zu bremsen. Dieser Bedarf besteht deshalb, da der autonom navigierenden Tauchkörper 30", wie oben bereits erläutert, im Regelfall eine gewisse Grund- bzw. Minimalgeschwindigkeit benötigt, um effektiv gesteuert zu werden und da der Raum in dem Käfig 20" begrenzt ist.

Das Fangseil 21" ist beispielsweise ein elastisches Seil oder etwa über viskoelastische Stoßdämpfer gelagert. Entsprechend Ausführungsbeispielen kann am autonom navigierenden Tauchkörper 30" ein Haken 31" vorgesehen sein, der das Fangseil 21" greift.

Entsprechend Ausführungsbeispielen wird der Haken 31" aktiv ausgefahren, sobald der autonom navigierenden Tauchkörper 30" in die Fangstation 20" einfährt. Hierzu kann die Fangstation 20" mit ihrer Elektronik (nicht dargestellt) die entsprechenden Steuersignale an den autonom navigierenden Tauchkörper 30" absetzen. Gleichzeitig werden die Propeller oder Düsen des Tauchfahrzeuges 30" abgestellt. Auch kann entsprechend einem weiteren Ausführungsbeispiel eine zusätzliche Arretierung, z.B. an der Fangstation 20" selbst ausgelöst werden.

Entsprechend einem weiterem Ausführungsbeispiel ist es auch möglich, für den Fall, dass der Haken 31" nicht in das Fangseil 21" einhakt, dass ein sogenannter Durchstartvorgang ausgelöst wird. Deshalb ist es vorteilhaft, dass der Käfig 20" sowohl vorne als auch hinten offen ist, so dass der autonom navigierenden Tauchkörper 30" hinten wieder hinausfahren kann und eine Schleife dreht, um ein zweites Mal in den Käfig einzufahren. Die Steuerung für den autonom navigierenden Tauchkörper 30" kann diesen Vorgang so lange wiederholen, bis das Fahrzeug stabil im Käfig gefangen ist.

Entsprechend einem weiteren Ausführungsbeispiel kann eine der oben erläuterten Fangstationen 20, 20' und 20" auch noch Schnittstellen, z.B. elektrische Schnittstellen zum Warten des autonom navigierenden Tauchkörpers 30, 30' oder 30" umfassen. Diese Schnittstellen dienen beispielsweise zum Aufladen der Batterie des autonom navigierenden Tauchkörpers 30', zum Überspielen der gemessenen Daten oder zum Aufspielen der nächsten Mission. Hierdurch ist es möglich, ohne dass die Fangstation 20, 20' bzw. 20" zusammen mit dem Tauchobjekt 30, 30' und 30" an Bord gehievt werden muss, die notwendigen Wartungsprozeduren vorzunehmen. Die Fangstation 20, 20' bzw. 20" zusammen mit dem jeweiligen autonom navigierenden Tauchkörper 30, 30' oder 30" muss nur dann an Bord befördern werden, wenn Reparaturen notwendig sind oder wenn der Tauchobjekt 30, 30', 30" verstaut werden soll.

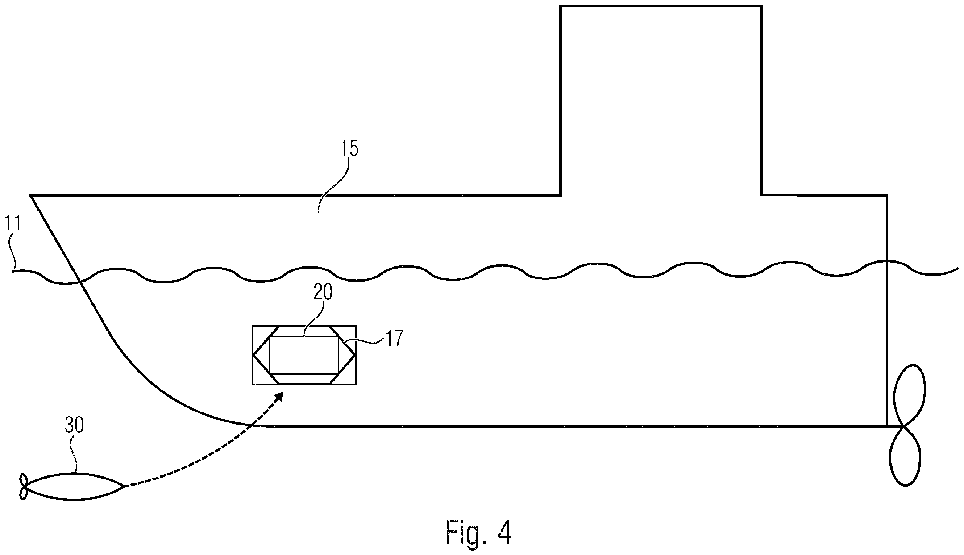

Bezug nehmend auf Fig. 4 wird ein weiteres Ausführungsbeispiel gezeigt. Da die oben erläuterte Navigationshilfe bzw. Navigationsverfahrensschritte dafür ausgelegt sind, dass ein autonom navigierenden Tauchkörper unterhalb der Wasseroberfläche eingefangen werden kann, ist es auch denkbar, dass das Mutterschiff 15 eine Öffnung bzw. eine mit einer Klappe freigebbare Öffnung 17 unterhalb der Wasserlinie 11 aufweist, so dass mittels der oben beschriebenen Prinzipien der Navigation der autonom navigierenden Tauchkörper 30' direkt in das Mutterschiff 15 hinein navigiert werden kann. Von einer anderen Seite betrachtet heißt das, dass die Fangstation 20 im Inneren des Schiffkörpers des Mutterschiffs 15 angeordnet ist und mittels der Öffnung 17 freigegeben werden kann. Ein derartiges Konzept ist nicht nur bei an der Wasseroberfläche 11 fahrenden Mutterschiffen 15, sondern bevorzugt auch bei Unterseebooten (nicht dargestellt) denkbar.

Alle oben erläuterten optionalen Ausführungsbeispiele, wie insbesondere die Fangvorrichtung sind mit dem hier vorgeschlagenen Konzept kombinierbar.

Da auch bei diesem Konzept das Aussetzen und Bergen unterhalb der Wasseroberfläche stattfindet, sind aufgrund der ruhigen Umgebung unter der Wasseroberfläche 11 gegenseitige Beschädigungen unwahrscheinlich. Auch hier können die Sensorik und die Steuerung in die Fangstation 20 bzw. das Mutterschiff 15 verlagert werden, was dann die wesentlichen Vorteile mit sich bringt, dass die energieintensiven Aperturen wie Beleuchtung und Kameras vom Mutterschiff aus versorgt werden, von dem auch das AUV beim Bergevorgang gesteuert wird.

An dieser Stelle sei darauf hingewiesen, dass auch wenn bei obigen Ausführungsbeispielen davon ausgegangen wird, dass das AUV ferngesteuert wird, sich dieser Fernsteuerungsvorgang bevorzugt auf das Einfahren in die Fangstation bezieht, während das AUV im Regelfall ansonsten autonom agiert.

Entsprechend weiteren können die obigen Steuersignale auch dazu genutzt werden, die Dockingstation im Wasser zu rotieren (unter der Voraussetzung, dass Mittel zur Ausrichtung 21a'-21d' an der Dockingstation vorgesehen sind), um Ist- und Soll-Vektor aneinander auszurichten.

An dieser Stelle sei darauf hingewiesen, dass die Sensorik nicht auf Kameras beschränkt ist, sondern dass alternativ auch andere Sensoren, wie Sonarsensoren zum Einsatz kommen können. Hier ist es dann vorteilhaft, wenn am AUV Sonarreflektoren angeordnet sind, die das Sonarsignal (bevorzugt gerichtet) reflektieren, sodass bildgebende Sonarsensoren das AUV orten können.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. System (10, 10') zur Navigation eines autonom navigierenden Tauchkörpers (30, 30', 30") beim Einfahren in eine Fangstation (20, 20', 20") unter der Wasseroberfläche (11) mit folgenden Merkmalen:
Mittel zur Ermittlung (22, 22') eines Ist-Bewegungsvektors (34, 34') des autonom navigierenden Tauchkörpers (30, 30', 30") in Bezug auf den Soll-Bewegungsvektor (24, 24'), welcher die optimale Einfahrrichtung in die Fangstation (20, 20', 20") beschreibt, wobei die Mittel zur Ermittlung (22, 22') der Ist-Bewegung an der Fangstation (20, 20', 20") befestigt sind;
Berechnungseinheit (26') zur Ermittlung der Abweichung zwischen dem Ist-Bewegungsvektor (34, 34') und dem Soll-Bewegungsvektor (24, 24'), um ausgehend von der Abweichung Steuersignale zu bestimmen, wobei die Berechnungseinheit (26') an der Fangstation (20, 20', 20") angeordnet ist; und
eine Steuerung, die basierend auf der Abweichung die Steuersignale bestimmt und mittels der Steuersignale den autonom navigierenden Tauchkörper (30, 30', 30") beim Einfahren in eine Fangstation (20, 20', 20") so steuert, dass der Ist-Bewegungsvektor (34, 34') dem Soll-Bewegungsvektor (24, 24') angenähert wird;
wobei der autonom navigierenden Tauchkörper (30, 30', 30") einen Autonomfahrmodus und einen Fernbedienungsfahrmodus aufweist und wobei die Steuerung ausgebildet ist, im Nahbereich der Fangstation den Fernbedienungsfahrmodus zu aktivieren.

2. System (10, 10') gemäß Anspruch 1, wobei die Steuereinheit (26') ein Akustikmodem (28') zur Aussendung eines akustischen Datensignals (29') und/oder ein Lichtmodem zur Ausgabe eines modulierten Lichtstrahls umfasst, und
wobei das Akustikmodem (28') oder das Lichtmodem ausgebildet ist, eine Kommunikationsverbindung zwischen der Fangstation (20, 20', 20") und dem autonom navigierenden Tauchkörper (30, 30', 30") herzustellen, um die Steuersignale auszutauschen.

3. System (10, 10') gemäß einem der vorherigen Ansprüche, wobei die Mittel mindestens eine Kamera umfassen; oder
wobei die Mittel mindestens eine Kamera umfassen und wobei der autonom navigierenden Tauchkörper (30, 30', 30") ein oder mehrere Positionsleuchten und/oder eine Lichtquelle (32') zur Ausgabe eines fokussierten Lichtstrahls (33') umfasst;
und wobei die Kamera ausgebildet ist, ausgehend von den optisch detektierten Positionsleuchten und/oder ausgehend von dem fokussierten Lichtstrahl (33') den Ist-Bewegungsvektor (34, 34') zu ermitteln; oder
wobei die Mittel mindestens eine Kamera umfassen und wobei der autonom navigierenden Tauchkörper (30, 30', 30") ein oder mehrere Positionsleuchten und/oder eine Lichtquelle (32') zur Ausgabe eines fokussierten Lichtstrahls (33') umfasst;
und wobei die Kamera ausgebildet ist, ausgehend von den optisch detektierten Positionsleuchten und/oder ausgehend von dem fokussierten Lichtstrahl (33') den Ist-Bewegungsvektor (34, 34') zu ermitteln und wobei die Lichtquelle (32') einen grünen oder blauen Laser umfasst, der den fokussierten Lichtstrahl (33') entlang der Längsachse des autonom navigierenden Tauchkörpers (30, 30', 30") emittiert.

4. System (10, 10') gemäß einem der vorherigen Ansprüche, wobei die Mittel zur Ermittlung (22, 22') ein aktives oder passives Sonar umfassen.

5. System (10, 10') gemäß einem der Ansprüche 2 bis 4, wobei die Berechnungseinheit (26') an der Fangstation (20, 20', 20") angeordnet ist und ausgebildet ist mittels des Akustikmodems (28') oder des Lichtmodems die Steuersignale an den zu steuernden autonom navigierenden Tauchkörper (30, 30', 30") zu übermitteln.

6. System (10, 10') gemäß einem der vorherigen Ansprüche, wobei die Fangstation (20, 20', 20") ein Käfig ist, der fest mit einem Mutterschiff (15) oder mittels Seilen mit dem Mutterschiff (15) verbunden ist.

7. System (10, 10') gemäß Anspruch 6, wobei die Fangstation (20, 20', 20") eine Schnittstelle zum autonom navigierenden Tauchkörper (30, 30', 30") umfasst, mittels welcher der autonom navigierenden Tauchkörper (30, 30', 30") mit elektrischer Energie versorgt werden kann.

8. System (10, 10') gemäß einem der Ansprüche 1 bis 7, wobei die Fangstation (20, 20', 20") in einer Unterwasseröffnung (17) eines Mutterschiffes (15) oder eines U-Bootes angeordnet ist.

9. System (10, 10') gemäß einem der vorherigen Ansprüche, wobei der autonom navigierenden Tauchkörper (30, 30', 30") eine weitere Kamera umfasst, die ausgebildet ist, die Fangstation (20, 20', 20") optisch zu detektieren und so seinen Ist-Bewegungsvektor (34, 34') in Bezug auf den Soll-Bewegungsvektor (24, 24') zu ermitteln.

10. System (10, 10') gemäß einem der vorherigen Ansprüche, wobei die Steuereinheit (26') ausgebildet ist, ein Abbremsen des autonom navigierenden Tauchkörpers (30, 30', 30") beim Einfahren in eine Fangstation (20, 20', 20") zu bewirken; oder wobei die Steuereinheit (26') ausgebildet ist, ein Abbremsen des autonom navigierenden Tauchkörpers (30, 30', 30") beim Einfahren in eine Fangstation (20, 20', 20") zu bewirken und wobei das Abbremsen durch Fassen eines Fangseils (21") der Fangstation (20, 20', 20") erfolgt; oder
wobei die Steuereinheit (26') ausgebildet ist, ein Abbremsen des autonom navigierenden Tauchkörpers (30, 30', 30") beim Einfahren in eine Fangstation (20, 20', 20") zu bewirken und wobei das Abbremsen durch Fassen eines Fangseils (21") der Fangstation (20, 20', 20") erfolgt und wobei die Steuerung ausgebildet ist, einen Haken (31") des autonom navigierenden Tauchkörpers (30, 30', 30") auszuklappen, um das Fangseil (21") mittels des Hakens (31") zu fassen, sobald der autonom navigierenden Tauchkörper (30, 30', 30") in die Fangstation (20, 20', 20") einfährt.

11. System (10, 10') gemäß einem der Ansprüche 10, wobei die Steuerung ausgebildet ist, ein Einfahrmanöver zu wiederholen, wenn der Haken (31") das Fangseil (21") verfehlt hat.

12. System (10, 10') gemäß einem der Ansprüche 1 bis 11, wobei die Fangstation Mittel zur Ausrichtung (21a'-21d') der Fangstation (20, 20', 20") im Wasser umfasst.

13. Verfahren (100) zur Navigation eines autonom navigierenden Tauchkörpers (30, 30', 30") beim Einfahren in eine Fangstation (20, 20', 20") unter der Wasseroberfläche, wobei der autonom navigierenden Tauchkörper (30, 30', 30") einen Autonomfahrmodus und einen Fernbedienungsfahrmodus aufweist, mit folgenden Schritten:
Ermitteln (110) eines Ist-Bewegungsvektors (34, 34') des autonom navigierenden Tauchkörpers (30, 30', 30") in Bezug auf den Soll-Bewegungsvektor (24, 24'), welcher die optimale Einfahrrichtung in die Fangstation (20, 20', 20") beschreibt; mittels Mitteln zur Ermittlung (22, 22') der Ist-Bewegung an der Fangstation (20, 20', 20") befestigt sind;
Ermitteln der Abweichung (120) zwischen dem Ist-Bewegungsvektor (34, 34') und dem Soll-Bewegungsvektor (24, 24'), um ausgehend von der Abweichung Steuersignale zu ermitteln;
Aktivieren im Nahbereich der Fangstation den Fernbedienungsfahrmodus; und
Steuern (130) des autonom navigierenden Tauchkörpers (30, 30', 30") basierend auf der Abweichung umfasst, und wobei das Steuern derart erfolgt, dass der Ist-Bewegungsvektor (34, 34') dem Soll-Bewegungsvektor (24, 24') angenähert wird.

14. Verfahren (100) gemäß Anspruch 13, wobei das Verfahren (100) den Schritt des Ausklappens eines Hakens (31") beim Einfahren in die Fangstation (20, 20', 20") umfasst, um mit dem Haken (31") ein Fangseil (21") der Fangstation zum Abbremsen zu fassen; und
wobei das Anfahrmanöver wiederholt wird, wenn der Haken (31") das Fangseil (21") verfehlt hat.

15. Computerprogramm mit einem Programmcode zur Durchführung des Verfahrens (100) nach einem der Ansprüche 13 bis 14, wenn das Programm auf einem Computer abläuft.

## Claims

1. System (10, 10') for navigation of an autonomously navigating submersible body (30, 30', 30") during entry into a docking station (20, 20', 20") below the water surface (11), comprising:
means for determining (22, 22') an actual motion vector (34, 34') of the autonomously navigating submersible body (30, 30', 30") in relation to the set motion vector (24, 24') describing the optimum entry direction into the docking station (20, 20', 20"), wherein the means for determining (22, 22') the actual motion is mounted on the docking station (20, 20', 20");
a calculating unit (26') for determining the deviation between the actual motion vector (34, 34') and the set motion vector (24, 24') to determine control signals based on the deviation, wherein the calculating unit (26') is disposed on the docking station (20, 20', 20"); and
a control determining the control signals based on the deviation and controlling the autonomously navigating submersible body (30, 30', 30") during entry into a docking station (20, 20', 20") by means of the control signals such that the actual motion vector (34, 34') approaches the set motion vector (24, 24');
wherein the autonomously navigating submersible body (30, 30', 30") comprises an autonomous driving mode and remote control driving mode and wherein the control is configured to activate the remote control driving mode in the near range of the docking station.

2. System (10, 10') according to claim 1, wherein the control unit (26') includes an acoustic modem (28') for emitting an acoustic data signal (29') and/or a light modem for outputting a modulated light beam and
wherein the acoustic modem (28') or the light modem is configured to establish a communication connection between the docking station (20, 20', 20") and the autonomously navigating submersible body (30, 30', 30") for exchanging the control signals.

3. System (10, 10') according to one of the preceding claims, wherein the means comprise at least one camera, or
wherein the means include at least one camera, and wherein the autonomously navigating submersible body (30, 30', 30") comprises one or several navigation lights and/or a light source (32') for emitting a focused light beam (33');
and wherein the camera is configured to determine the actual motion vector (34, 34') based on the optically detected navigation lights and/or based on the focused light beam (33'), or
wherein the means include at least one camera, and wherein the autonomously navigating submersible body (30, 30', 30") comprises one or several navigation lights and/or a light source (32') for emitting a focused light beam (33');
and wherein the camera is configured to determine the actual motion vector (34, 34') based on the optically detected navigation lights and/or based on the focused light beam (33') and wherein the light source (32') comprises a green or blue laser emitting the focused light beam (33') along the longitudinal axis of the autonomously navigating submersible body (30, 30', 30").

4. System (10, 10') according one of the preceding claims, wherein the means for determining (22, 22') comprise an active or passive sonar.

5. System (10, 10') according to one of claims 2 to 4, wherein the calculating unit (26') is disposed on the docking station (20, 20', 20") and configured to transmit the control signals by means of the acoustic modem (28') or the light modem to the autonomously navigating submersible body (30, 30', 30") to be controlled.

6. System (10, 10') according to one of the preceding claims, wherein the docking station (20, 20', 20") is a cage that is firmly connected to a mother ship (15) or connected to the mother ship (15) by means of ropes.

7. System (10, 10') according to claim 6, wherein the docking station (20, 20', 20") includes an interface to the autonomously navigating submersible body (30, 30', 30") by means of which the autonomously navigating submersible body (30, 30', 30") can be supplied with electric energy.

8. System (10, 10') according to one of claims 1 to 7, wherein the docking station (20, 20', 20") is disposed in an underwater opening (17) of a mother ship (15) or a submarine.

9. System (10, 10') according to one of the preceding claims, wherein the autonomously navigating submersible body (30, 30', 30") comprises a further camera that is configured to optically detect the docking station (20, 20', 20") and to thereby determine its actual motion vector (34, 34') in relation to the set motion vector (24, 24').

10. System (10, 10') according to one of the preceding claims, wherein the control unit (26') is configured to effect slowing-down of the autonomously navigating submersible body (30, 30', 30") during entry into a docking station (20, 20', 20"); or
wherein the control unit (26') is configured to cause slowing down of the autonomously navigating submersible body (30, 30', 30") during entry into a docking station (20, 20', 20"), and wherein slowing down is performed by catching an arresting rope (21") of the docking station (20, 20', 20"), or
wherein the control unit (26') is configured to cause slowing down of the autonomously navigating submersible body (30, 30', 30") during entry into a docking station (20, 20', 20"), and wherein slowing down is performed by catching an arresting rope (21") of the docking station (20, 20', 20") and wherein the control is configured to fold out a hook (31") of the autonomously navigating submersible body (30, 30', 30") to catch the arresting rope (21") by means of the hook (31") as soon as the autonomously navigating submersible body (30, 30', 30") enters the docking station (20, 20', 20").

11. System (10, 10') according to claim 10, wherein the control is configured to repeat an entry maneuver when the hook (31") has missed the arresting rope (21").

12. System (10, 10') according to one of claims 1 to 11, wherein the docking station comprises means for orienting (21a'-21d') the docking station (20, 20', 20") in water.

13. Method (100) for navigation of an autonomously navigating submersible body (30, 30', 30") during entry into a docking station (20, 20', 20") below the water surface, wherein the autonomously navigating submersible body (30, 30', 30") comprises an autonomous driving mode and remote control driving mode, the method comprising:
determining (110) an actual motion vector (34, 34') of the autonomously navigating submersible body (30, 30', 30") in relation to the set motion vector (24, 24') describing the optimum entry direction into the docking station (20, 20', 20"); fixed by means of means for determining (22, 22') the actual motion at the docking station (20, 20', 20");
determining the deviation (120) between the actual motion vector (34, 34') and the set motion vector (24, 24') to determine control signals based on the deviation;
activating the remote control driving mode in the near range of the docking station; and
controlling (130) the autonomously navigating submersible body (30, 30', 30") based on the deviation and wherein controlling is performed such that the actual motion vector (34, 34') approaches the set motion vector (24, 24').

14. Method (100) according to claim 13, wherein the method (100) includes the step of folding out a hook (31") during entry into the docking station (20, 20', 20") and to catch an arresting rope (21") of the docking station with the hook (31") for slowing down; and
wherein the entry maneuver is repeated when the hook (31") has missed the arresting rope (21").

15. Computer program having a program code for performing the method (100) according to one of claims 13 to 14 when the program runs on a computer.

## Revendications

1. Système (10, 10') de navigation d'un véhicule de plongée à navigation autonome (30, 30', 30") lors de l'entrée dans une station d'arrêt (20, 20', 20") sous la surface de l'eau (11), aux caractéristiques suivantes:
des moyens destinés à déterminer (22, 22') un vecteur de mouvement réel (34, 34') du véhicule de plongée à navigation autonome (30, 30', 30") par rapport au vecteur de mouvement de consigne (24, 24') qui décrit la direction d'entrée optimale dans la station d'arrêt (20, 20', 20"), où les moyens destinés à déterminer (22, 22') le mouvement réel sont fixés à la station d'arrêt (20, 20', 20") ;
une unité de calcul (26') destinée à déterminer l'écart entre le vecteur de mouvement réel (34, 34') et le vecteur de mouvement de consigne (24, 24'), pour déterminer, à partir de l'écart, des signaux de commande, où l'unité de calcul (26') est disposée à la station d'arrêt (20, 20', 20"); et
un moyen de commande qui détermine, sur base de l'écart, les signaux de commande et commande, au moyen des signaux de commande, le véhicule de plongée à navigation autonome (30, 30', 30") lors de l'entrée dans une station d'arrêt (20, 20', 20") de sorte que le vecteur de mouvement réel (34, 34') soit proche du vecteur de mouvement de consigne (24, 24');
dans lequel le véhicule de plongée à navigation autonome (30, 30', 30") présente un mode de navigation autonome et un mode de navigation par commande à distance et dans lequel le moyen de commande est configuré pour activer, au voisinage de la station d'arrêt, le mode de navigation par commande à distance.

2. Système (10, 10') selon la revendication 1, dans lequel l'unité de commande (26') comporte un modem acoustique (28') destiné à émettre un signal de données acoustique (29') et/ou un modem lumineux destiné à émettre un faisceau lumineux modulé, et dans lequel le modem acoustique (28') ou le modem lumineux est conçu pour établir une liaison de communication entre la station d'arrêt (20, 20', 20") et le véhicule de plongée à navigation autonome (30, 30', 30") pour échanger les signaux de commande.

3. Système (10, 10') selon l'une des revendications précédentes, dans lequel les moyens comportent au moins une caméra; ou
dans lequel les moyens comportent au moins une caméra et dans lequel le véhicule de plongée à navigation autonome (30, 30', 30") comporte un ou plusieurs feux de position et/ou une source de lumière (32') destinée à émettre un faisceau de lumière focalisé (33');
et dans lequel la caméra est conçue pour déterminer, à partir des feux de position détectés optiquement et/ou du faisceau de lumière focalisé (33'), le vecteur de mouvement réel (34, 34'); ou
dans lequel les moyens comportent au moins une caméra et dans lequel le véhicule de plongée à navigation autonome (30, 30', 30") comporte un ou plusieurs feux de position et/ou une source de lumière (32') destinée à émettre un faisceau de lumière focalisé (33');
et dans lequel la caméra est conçue pour déterminer, à partir des feux de position détectés optiquement et/ou du faisceau de lumière focalisé (33'), le vecteur de mouvement réel (34, 34') et dans lequel la source de lumière (32') comporte un laser vert ou bleu qui émet le faisceau de lumière focalisé (33') le long de l'axe longitudinal du véhicule de plongée à navigation autonome (30, 30', 30").

4. Système (10, 10') selon l'une des revendications précédentes, dans lequel les moyens de détermination (22, 22') comportent un sonar actif ou passif.

5. Système (10, 10') selon l'une des revendications 2 à 4, dans lequel l'unité de calcul (26') est disposée à la station d'arrêt (20, 20', 20") et est conçue pour transmettre au moyen du modem acoustique (28') ou du modem lumineux les signaux de commande au véhicule de plongée à navigation autonome à commander (30, 30', 30") .

6. Système (10, 10') selon l'une des revendications précédentes, dans lequel la station d'arrêt (20, 20', 20") est une cage qui est connectée de manière fixe à un navire mère (15) ou au moyen de câbles au navire mère (15).

7. Système (10, 10') selon la revendication 6, dans lequel la station d'arrêt (20, 20', 20") comporte une interface avec le véhicule de plongée à navigation autonome (30, 30', 30") au moyen de laquelle le véhicule de plongée à navigation autonome (30, 30', 30") peut être alimenté en énergie électrique.

8. Système (10, 10') selon l'une des revendications 1 à 7, dans lequel la station d'arrêt (20, 20', 20") est disposée dans un orifice immergé (17) d'un navire mère (15) ou d'un sous-marin.

9. Système (10, 10') selon l'une des revendications précédentes, dans lequel le véhicule de plongée à navigation autonome (30, 30', 30") comporte une autre caméra qui est conçue pour détecter optiquement la station d'arrêt (20, 20', 20") et pour ainsi déterminer son vecteur de mouvement réel (34, 34') par rapport au vecteur de mouvement de consigne (24, 24').

10. Système (10, 10') selon l'une des revendications précédentes, dans lequel l'unité de commande (26') est conçue pour provoquer un freinage du véhicule de plongée à navigation autonome (30, 30', 30") lors de l'entrée dans une station d'arrêt (20, 20'). 20"); ou dans lequel l'unité de commande (26') est conçue pour provoquer un freinage du véhicule de plongée à navigation autonome (30, 30', 30") lors de l'entrée dans une station d'arrêt (20, 20', 20") et dans lequel le freinage a lieu en saisissant un câble d'arrêt (21") de la station d'arrêt (20, 20', 20"); ou
dans lequel l'unité de commande (26') est conçue pour provoquer un freinage du véhicule de plongée à navigation autonome (30, 30', 30") lors de l'entrée dans une station d'arrêt (20, 20', 20") et dans lequel le freinage a lieu en saisissant un câble d'arrêt (21") de la station d'arrêt (20, 20', 20") et dans lequel le moyen de commande est conçu pour déplier un crochet (31") du véhicule de plongée à navigation autonome (30, 30', 30") pour saisir le câble d'arrêt (21") au moyen du crochet (31") dès que le véhicule de plongée à navigation autonome (30, 30', 30") entre dans la station d'arrêt (20, 20', 20").

11. Système (10, 10) selon la revendication 10, dans lequel le moyen de commande est conçu pour répéter une manœuvre d'entrée lorsque le crochet (31") a manqué le câble d'arrêt (21").

12. Système (10, 10') selon l'une des revendications 1 à 11, dans lequel la station d'arrêt comporte des moyens destinés à aligner (21a' à 21d') la station d'arrêt (20, 20', 20") dans l'eau.

13. Procédé (100) de navigation d'un véhicule de plongée à navigation autonome (30, 30', 30") lors de l'entrée dans une station d'arrêt (20, 20', 20") sous la surface de l'eau, dans lequel le véhicule de plongée à navigation autonome (30, 30', 30") présente un mode de navigation autonome et un mode de navigation par commande à distance, aux étapes suivantes consistant à:
déterminer (110) un vecteur de mouvement réel (34, 34') du véhicule de plongée à navigation autonome (30, 30', 30") par rapport au vecteur de mouvement de consigne (24, 24') qui décrit la direction d'entrée optimale dans la station d'arrêt (20, 20', 20");
à l'aide de moyens destinés à déterminer (22, 22') le mouvement réel qui sont fixés à la station d'arrêt (20, 20', 20");
déterminer l'écart (120) entre le vecteur de mouvement réel (34, 34') et le vecteur de mouvement de consigne (24, 24') pour déterminer, à partir de l'écart, les signaux de commande;
activer le mode de navigation par commande à distance à proximité de la station d'arrêt; et
commander (130) le véhicule de plongée à navigation autonome (30, 30', 30") sur base de l'écart, et où la commande a lieu de sorte que le vecteur de mouvement réel (34, 34') soit proche du vecteur de mouvement de consigne (24, 24').

14. Procédé (100) selon la revendication 13, dans lequel le procédé (100) comporte l'étape consistant à déplier un crochet (31") lors de l'entrée dans la station d'arrêt (20, 20', 20") pour saisir par le crochet (31") un câble d'arrêt (21") de la station d'arrêt pour le freinage; et
dans lequel la manoeuvre d'approche est répétée lorsque le crochet (31") a manqué le câble d'arrêt (21").

15. Programme d'ordinateur avec un code de programme pour réaliser le procédé (100) selon l'une des revendications 13 à 14 lorsque le programme est exécuté sur un ordinateur.
